# EUROPEAN PATENT SPECIFICATION

(11) **EP 2 303 576 B1**
(45) Date of publication and mention of the grant of the patent: **26.02.2014**
(21) Application number: 09789744.1
(22) Date of filing: 03.06.2009
(51) Int. Cl.: B32B 27/32

(54) **MATTE SURFACE MULTILAYER FILMS HAVING IMPROVED SEALING PROPERTIES, THEIR METHODS OF MANUFACTURE, AND ARTICLES MADE THEREFROM**
MATTE MEHRSCHICHTFOLIEN MIT VERBESSERTEN VERSIEGELUNGSEIGENSCHAFTEN, HERSTELLUNGSVERFAHREN DAFÜR UND DARAUS HERGESTELLTE ARTIKEL
FILMS MULTICOUCHES DE SURFACE MAT AYANT DES PROPRIÉTÉS D'ÉTANCHÉITÉ AMÉLIORÉES, LEURS PROCÉDÉS DE FABRICATION ET ARTICLES FABRIQUÉS À PARTIR DE CEUX-CI

(30) Priority: 16.07.2008 US 81225 P
(43) Date of publication of application: 06.04.2011
(73) Proprietor: Jindal Films Americas, LLC, Macedon, NY 14502 (US)
(72) Inventor: SHEPPARD, Robert, M., Victor NY 14564 (US); BENDER, Eric, W., Stewartsville NJ 08886 (US)
(74) Representative: Wightman, David Alexander
(86) International application number: PCT/US2009/046041
(87) International publication number: WO 2010/008696

(56) References cited:
- US-A1- 2007 082 154

## Description

### BACKGROUND OF THE INVENTION

Polypropylene-based multilayer films are widely used in packaging applications, such as pouches for dry food mixes, pet foods, snack foods, and seeds. Such multilayer films preferably have the ability to form strong seals at relatively low temperatures and, in some instances, the film must do so in the presence of contamination in the seal region from the contents of the pouches.

Previously, multilayer films have incorporated various "soft" polymers into different layers of the multilayer film in order to generate high seal strength. While these films have high seal strength, they often require high loading levels of anti-block and slip additives to prevent problems with winding, blocking, and package forming. For example, U.S. Patent Application Serial No. 11/096,298 discloses multilayer films wherein a soft polymer is blended in a core layer and a tie layer comprising the soft polymer and, optionally, another polymer. A sealable layer is provided on the side of the tie layer opposite the core layer. The multilayer film may be transparent, contain a cavitating agent, or is pigmented to form an opaque film. Also, the multilayer film may be metallized or coated with a barrier coating.

U.S. Patent Application Serial No. 11/248,838 discloses multilayer films including a core layer, a tie layer made from at least 10 wt% of a first polymer, and where the first polymer preferably is not present in the core layer. Optionally, the multilayer film may have a skin layer, a second tie layer, and/or a second skin layer.

U.S. Patent Application Serial No. 11/588,204 discloses a heat sealable film having a heat sealable layer comprising a blend of propylene-based polymers.

Other films have incorporated matte resins to increase the film's surface roughness, however these films often do not have sufficient seal strength. For example, U.S. Patent Application Serial No. 09/826,338 discloses multilayer matte films having a core layer and one or more matte layers on its surfaces. Additionally, each one or more matte layers may have a skin layer or layers contiguous to the matte layer.

U.S. Patent No. 5,492,757 discloses an opaque, matte, multilayer polypropylene film having at least one matte surface which includes at least one base layer and at least one interlayer and an outerlayer applied to this interlayer. The base layer includes polypropylene and fillers. The interlayer includes a mixture or blend of two components I or II. Component I is a propylene homopolymer or a copolymer of α-olefins having 2 to 10 carbon atoms, or a terpolymer of α-olefins having 2 to 10 carbon atoms or a mixture or blend of said polymers. Component II is an HDPE or a blend of HDPE and a propylene homopolymer or a copolymer of α-olefins having 2 to 10 carbon atoms or a terpolymer having 2 to 10 carbon atoms. The outer layer essentially includes a propylene homopolymer or a copolymer of α-olefins having 2 to 10 carbon atoms or a terpolymer of α-olefins having 2 to 10 carbon atoms or a mixture or blend of said polymers.

None of the above films combine desired improvements in processability, seal strength, durability, hot tack, and sufficiently reduced seal temperatures needed for some of today's challenging packaging operations. In particular, a need exists for a multilayer film that has both good sealing properties and increased surface roughness so as to not be dependant on high loading levels of anti-block or slip additives. Such a film has the opportunity to replace other packaging substrates, such as paper, foil, and polyethylene laminations in many packaging applications, such as with dry-particulate foods.

### SUMMARY OF THE INVENTION

The present disclosure relates to multilayer films having improved low temperature sealing properties and improved seal strength. In one aspect, films according to this disclosure may comprise an arrangement of co-extruded polymeric layers that contribute individually and collectively to improving seal strength, impact strength, resilience, hermeticity, and reduced-temperature sealability of the film.

In one embodiment, the present disclosure relates to a multilayer film having a matte sealant surface according to claim 1. The multilayer film has a matte sealant surface due to a blend of incompatible polymers in the matte tie layer. The incompatible blend in the matte tie layer increases the surface roughness of the sealant skin, which in turn, reduces the intimate contact between the film layers when in roll form. Thus, when the film is in roll form, air may be trapped between the two outer layers, such as in one embodiment between the sealant skin layer and the metallizable skin layer. In some embodiments, this may aid in improving winding, reducing metallized roll blocking, and also aids in improving the multilayer film's metallized barrier properties by reducing pin holes caused by anti-block scratches and spot blocking.

A multilayer film is provided which has a core layer, a matte tie layer, and a sealant skin layer. The matte tie layer is intermediate the core and sealant skin layers and comprises a first polymer component and a second polymer component. The multilayer film has a surface roughness (Ra) of at least 0.25 µm and a peak count (Pc) of at least 30 as measured by surface profilometry. The seal of the sealant layer to itself has a seal strength of greater than 1400 g/2.54 cm at 127°C.

In some aspects the second polymer component is in the range of 10 wt% to 75 wt% of the matte tie layer. In other aspects, the first polymer component is in the range of 25 wt% to 90 wt% of the matte tie layer.

In some aspects the core layer comprises a high-crystallinity polypropylene.

The first polymer component comprises a blend of at least two incompatible polymers. The first polymer component must comprise a blend of at least one ethylene-propylene-butene terpolymer and at least one polyethylene. If a further aspect, the first polymer component comprises a blend of at least one ethylene-propylene-butene terpolymer, at least one high density polyethylene, and at least one low density polyethylene.

In some embodiments, the multilayer film is preferably oriented in at least one direction, more preferably biaxially oriented. The film may be surface treated to receive one or more coatings, such as barrier coatings, and/or to receive metallization, and may be formed into a package to enclose a product.

These and other features, aspects, and advantages of the present disclosure will become better understood with regard to the following description and appended claims.

### DETAILED DESCRIPTION OF THE INVENTION

Various specific embodiments, versions, and examples are described herein, including exemplary embodiments and definitions that are adopted for purposes of understanding the claimed invention. While the following detailed description gives specific preferred embodiments, those skilled in the art will appreciate that these embodiments are exemplary only, and that the invention can be practiced in other ways.

As used herein, the term "polymer" may be used to refer to homopolymers, copolymers, interpolymers, terpolymers, etc.

As used herein, the term "isotactic" is defined as polymeric stereoregularity having at least 40% isotactic pentads of methyl groups derived from propylene according to analysis by ¹³C-NMR.

As used herein, "stereoregular" is defined to mean that the predominant number, e.g., greater than 80%, of the propylene units in the polypropylene or in the polypropylene continuous phase of a blend, such as impact copolymer exclusive of any other monomer such as ethylene, has the same 1,2 insertion and the stereochemical orientation of the pendant methyl group is the same, either meso or racemic.

As used herein, "intermediate" is defined as the position of one layer of the multilayer film wherein said layer lies between two other identified layers. In some embodiments, the intermediate layer may be in direct contact with either or both of the two identified layers. In other embodiments, additional layers may also be present between the intermediate layer and either or both of the two identified layers.

As used herein, "substantially free" is defined to mean that the referenced film layer is largely, but not necessarily wholly, absent a particular component. In some embodiments, the layer is completely free of the particular component, however, in other embodiments, small amounts of the component may be present within the referenced layer as a result of standard manufacturing methods, including recycling of film scraps and edge trim during processing.

The terms "compliant" or "compliance" as used herein refer to the ability of the sealed area of film to deform or conform within the sealing jaws during sealing operations. They additionally refer to the ability to elastically and/or plastically deform and diffuse stress throughout the multilayer film substrate subsequent to sealing operations when the seal is subjected to stress.

The term "incompatible polymers" is used herein to refer to two or more polymeric blending partners which are at least partially immiscible, and in some instances wholly immiscible.

The multilayer film may have a matte appearance indicating that the film has a relatively high haze and/or relatively low gloss. However, as used herein the terms "matte tie layer" or "matte surface" refer to the layer and/or film having a surface roughness, i.e., the film is not smooth.

The multilayer film comprises a core layer, a matte tie layer, and a sealant skin layer, wherein the matte tie layer comprises at least one first polymer component ("FPC"), where the FPC is a blend of at least two incompatible polymers. The matte tie layer further comprises at least one second polymer component ("SPC"). The matte tie layer may comprise 10 wt% to 75 wt% of the SPC and 25 wt% to 90 wt% of the FPC, or in other embodiments 10 wt% to 30 wt% of the SPC and 70 wt% to 90 wt% of the FPC.

The matte tie layer is intermediate the core layer and the sealant skin layer. The multilayer film may further comprise additional tie layers and/or an outer skin layer. The film may be metallized, coated, printed, and/or laminated.

The multilayer film may generally have a matte appearance. In one embodiment, the multilayer film has a relatively low gloss. The film preferably has a gloss in the range of 15 to 80, or 25 to 70, as measured by ASTM D-2457 at an angle of 45°.

Thus, while the matte tie layer may provide a film with a matte appearance, the matte tie layer further provides improved processability to the multilayer film. The domains of incompatible polymer within the FPC of the matte tie layer create a microroughness which protrude through and influence the sealant skin layer. Thus, the blend in the matte tie layer increases the surface roughness of the sealant skin layer, which reduces the intimate contact between the film's outer layers when the film is wound-up during processing. Because there is reduced contact between the film's outer layers, the multilayer film is less dependent on anti-block and slip additives. Thus, lower levels (if any at all) of anti-block and slip additives are needed. This in turn improves winding and reduces roll blocking. It may also improve barrier properties in some embodiments by reducing pin holes caused by anti-block scratches and spot blocking.

Furthermore, the presence of the SPC may permit the core layer, matte tie layer, and sealant skin layer to act synergistically with each other to dissipate stress. When force is applied to a seal of the sealant skin layer to itself, the film diffuses or dissipates the stress throughout each of the layers through improved plastic deformation or compliance, instead of leaving the stress concentrated in the seal layer. A seal that dissipates the stress may generally facilitate a stronger seal than the same film having a concentrated stress region.

It is contemplated that a benefit in seal strength may be realized through improved bonding interaction between the core, tie, and seal layers. Improved bonding may be a result of improved flowability of the SPC, both within the matte tie layer comprising the SPC and at the interface with the layers adjacent to the SPC-containing layer, resulting in improved interlayer molecular intermingling at the layer interfaces. As a result of the improved elasticity or compliance, the multilayer film may also provide improvements in seal strength integrity and improved hermetic sealability.

The film has a seal strength when sealed to itself at 127°C of greater than 1400 g/2.54 cm, or preferably greater than 2000 g/2.54 cm, or most preferably greater than 2400 g/2.54 cm.

The multilayer film has a surface roughness (Ra) of at least 0.25 µm, or at least 0.30 µm, or in some embodiments of at least 0.35 µm, or at least 0.50 µm, or in some embodiments of at least 0.55 µm as measured by surface profilometry.

The multilayer film's surface has a peak count (Pc) of greater than 30, or greater than 35, or greater than 40, or greater than 50, or greater than 75, or in some embodiments greater than 100 as measured by surface profilometry.

The multilayer film possesses both good seal strength and surface roughness. Thus, the multilayer film has a surface roughness (Ra) of at least 0.25 µm and a peak count (Pc) of at least 30 as measured by surface profilometry and a seal strength when the sealant layer is sealed to itself of at least 1400 g/2.54 cm at 127°C. In other embodiments, the multilayer film may have a surface roughness (Ra) of at least 0.30 µm, a peak count (Pc) of at least 30, and a seal strength of greater than 2000 g/2.54 cm; or a surface roughness (Ra) of at least 0.35 µm, a peak count (Pc) of at least 35, and a seal strength of at least 2400 g/2.54 cm.

### First Polymer Component

The first polymer component ("FPC") is generally a matte resin, i.e. a blend of incompatible polymers. Materials useful in the FPC include, but are not limited to, ethylene propylene copolymers and blends of incompatible polymers, such as ethylene propylene random copolymers, polypropylene homopolymers, high density polyethylene ("HDPE"), ethylene vinyl acetate ("EVA"), ethylene methyl acrylate ("EMA"), ethylene ethyl acrylate ("EEA"), ethylene propylene butene terpolymers ("EPB"), propylene butene copolymer ("PB"), and combinations thereof.

Preferred matte resins are chosen in part because they contain polymers which contribute to the sealability of the film. For example, in the preferred embodiments, the FPC is a blend of incompatible polymers wherein at least one of the polymers in the blend has good sealing properties. Thus, in preferred embodiments at least one polymer of the FPC has a reduced melting temperature as compared to more crystalline polymers. This allows the FPC to contribute to the matte surface of the multilayer film and also to the sealability of the film. In particularly preferred embodiments, the FPC comprises an EPB terpolymer.

The FPC can be blends of high density polyethylene resins with a predominately propylene based polymer (homopolymer, copolymer or terpolymer). The FPC may include blends of PE with different densities; such as, for example, a blend of HDPE with a density of 0.95 g/cm³ or greater and a lower density polyethylene with a density of 0.92 g/cm³ or less.

Embodiments may include blending a low molecular weight copolymer and/or terpolymer with a high molecular weight copolymer and/or terpolymer in the FPC. For example, the FPC may be formed by providing a blend of at least one high molecular weight, phase-separating component, and at least one low molecular weight phase-separating component, with high molecular weight high density polyethylene (HMW HDPE). The ratio of high molecular weight copolymer and/or terpolymer to low molecular weight copolymer and/or terpolymer, may be in the range of 25:75 to 75:25, or 50:50 high molecular weight component to low molecular component.

Examples of suitable high molecular weight copolymers and or terpolymers include, but are not limited to, copolymers and terpolymers having a melt flow rate of equal to or less than 8 dg/min, as measured by ASTM D 1236 at 230° C, such as JPC XPM 7700 or JPC XPM 7800 series propylene terpolymers both of which are available from Japan Polypropylene Corporation. Examples of suitable low molecular weight copolymers and/or terpolymers include, but are not limited to, copolymers and terpolymers having a melt flow rate of equal to or greater than 10 dg/min, such as HF3193 a propylene terpolymer, available from Japan Polypropylene Corp.

HMW HDPE polymers may have a melt index of less than 1 or less than 0.5, as measured in accordance with ASTM D1238, under a load of 2.16 kg at 190° C. The HMW HDPE may have a density in the range of about 0.940 g/cm³ to about 0.970 g/cm³, and a melting point of in the range of about 115° C to about 140° C. For example, the HMW HDPE may have a density in the range of 0.95 - 0.970 g/cm³, and a melting point in the range of 120° C - 134° C.

In another embodiment, the FPC may include a copolymer of ethylene and propylene and a terpolymer of ethylene, propylene and butylene, wherein the copolymer and terpolymer may include predominantly propylene. Such copolymers or terpolymers, may contain more than 80% propylene. The ethylene polymer may include a copolymer or a blend of different kinds of ethylene polymers. For example, the ethylene polymer may be a blend of two or more ethylene polymers each having different densities. In one embodiment, the ethylene polymer comprises at least a first ethylene polymer having a density of at least 0.91 g/cm³ and a second ethylene polymer having a density, which is different from the density of the first ethylene polymer. For example, the blend may comprise high density polyethylene and low density polyethylene, or linear low density polyethylene. The ratio of the blend components may vary depending upon the polyethylene components of the blend and the desired characteristics of the layer. A blend, in which an equal proportion of each component is employed, such as a 50:50 blend, may be used.

In one embodiment the FPC includes a blend of at least one EPB and a polyethylene. The polyethylene may be a HDPE or may be a LDPE. In other embodiments, the FPC is a blend of at least one EPB, at least one LDPE, and at least one HDPE, for example, such as a blend of 50% ethylene-propylene-butene-1 terpolymer, 40% high density polyethylene (0.95 g/cm³), and 10% of a lower density polyethylene (0.92 g/cm³ or less).

The FPC may include, but is not limited to, the following commercially available polymer products: EP 8573, which is an EP copolymer available from Total Polypropylene Company; JPC 7800, which is an EPB terpolymer available from Japan Polypropylene Corporation; Total EOD 97-09, which is metallocene catalyzed isotactic polypropylene sold by Total Polypropylene Company; Total EOD 98-03, which is metallocene catalyzed syndiotactic polypropylene sold by Total Polypropylene Company; Equistar M6211, which is a HMW HDPE resin from Equistar Corporation; Mobil HXZ 801 HDPE resin from ExxonMobil Chemical Company; and Equistar L5005 HDPE polyethylene resin from Equistar Company.

### Second Polymer Component

The second polymer component ("SPC") includes polymer resins that are less stiff, have lower modulus, are more flexible and elastic, and tend to have a more plastic stress-strain behavior than the more common polymer film-forming resins such as isotactic polypropylene and high-density polyethylene. Acceptable SPCs include, but are not limited to, resins having more elastic or amorphous-type functional properties as opposed to more crystalline properties.

The SPC may improve the compliance or resilience of the layer in which it is included, both during and after sealing. Examples of suitable SPCs include impact and block copolymers, cross-linked polymers, metallocene catalyzed random copolymers, syndiotactic propylene, polypropylene, metallocene catalyzed polypropylene, random and mini-random propylene copolymers, polyethylene, and other polymers having reduced modulus or improved elastic properties as compared to more crystalline polymers, such as isotactic polypropylene or high density polyethylene, which do not qualify as acceptable SPCs.

The SPC may have a density in the range of 0.850 g/cm³ to 0.940 g/cm³, more preferably in the range of 0.860 g/cm³ to 0.900 g/cm³, most preferably in the range of 0.890 g/cm³ to 0.900 g/cm³.

The SPC may have a melting point temperature, as measured by DSC as described below, of less than 160°C or less than 150°C. In some embodiments the melting point temperature may be in the range of 40°C to 160°C, more preferably 60°C to 150°C.

The SPC may have a flexural modulus of preferably not more than 2100 MPa, more preferably not more than 1500 MPa, most preferably in the range of 20 MPa to 700 MPa. The SPC will most commonly include those polymers having a flexural modulus (ASTM D790) of less than about 550 MPa. Preferably, the SPC include those polymers having a flexural modulus of less than about 350 MPa, and for some embodiments less than about 150 MPa.

In some embodiments, the SPC has a melt flow rate in the range of 2 dg/min. to 100 dg/min., preferably in the range of 5 dg/min. to 50 dg/min., more preferably in the range of 5 dg/min. to 25 dg/min., most preferably 5 dg/min. to 10 dg/min.

The SPC may also be defined as those resins having a Vicat softening point (ASTM D 1525) of less than or equal to about 108°C.

In one embodiment, the SPC includes those homopolymers, copolymers, terpolymers, or other polymers having at least one of the following properties:
i. Melting point temperature, "Tₘ" less than or equal to about 142°C;
ii. Vicat Softening Point (ASTM D1525) of less than or equal to about 108°C; and/or
iii. Flexural Modulus (ASTM D790) of less than or equal to about 550 MPa.

In another embodiment, the SPC includes those polymers having at least one of the following sets of properties:
i. Density in the range of 0.850 g/cm³ to 0.940 g/cm³, a DSC melting point in the range of 40°C to 160°C, and a melt flow rate in the range of 2 dg/min. to 100 dg/min.;
ii. A propylene-ethylene copolymer including about 75 wt% to about 96 wt% propylene, about 4 wt% to about 25 wt% ethylene and having a density in the range of 0.850 g/cm³ to 0.900 g/cm³;
iii. A flexural modulus of not more than 2100 MPa and an elongation of at least 300%;
iv. Isotactic stereoregularity, about 84 wt% to about 93 wt% propylene, about 7 wt% to about 16 wt% ethylene, a DSC melting point in the range of about 42°C to about 85°C, a heat of fusion less than 75 J/g, crystallinity in the range of about 2% to about 65%, and a molecular weight distribution of about 2.0 to about 3.2;
v. A polymer blend, comprising at least one polymer (A) and at least one polymer (B), polymer (A) comprising about 60 wt% to about 98 wt% of the blend, and polymer (A) comprising about 82 wt% to about 93 wt% of units derived from propylene and about 7 wt% to about 18 wt% of units derived from a comonomer selected from the group consisting of ethylene and an unsaturated monomer other than ethylene, and polymer (A) is further characterized as comprising crystallizable propylene sequences, and polymer (B) comprising an isotactic thermoplastic polymer other than polymer (A); and
vi. A polymer blend, comprising at least one polymer (A) and at least one polymer (B), polymer (A) comprising about 60 wt% to about 98 wt% of the blend, and polymer (A) comprising about 65 wt% to about 96 wt% of units derived from propylene and about 4 wt% to about 35 wt% of units derived from a comonomer selected from the group consisting of ethylene and an unsaturated monomer other than ethylene, and polymer (A) is further characterized as comprising crystallizable propylene sequences, and polymer (B) comprising an isotactic thermoplastic polymer other than polymer (A).

Preferably, the SPC comprises C₂C₃ random copolymers, C₂C₃C₄ random terpolymers, heterophasic random copolymers, C₄ homopolymers, C₄ copolymers, metallocene polypropylenes, propylene-based or ethylene-based elastomers and/or plastomers, or combinations thereof. In preferred embodiments, the SPC has a density in the range of 0.850 g/cm³ to 0.940 g/cm³, a DSC melting point in the range of 40°C to 160°C, and a melt flow rate in the range of 2 dg/min. to 100 dg/min.

For further example, other acceptable SPCs include, but are not limited to, impact copolymers or heterophasic polymer blends that typically contain about 5 to 25 percent by weight of an elastomeric compound to incorporate rubber-like properties to the normally rigid backbone of polypropylene-based polymers. Other heterophasic copolymers, such as those made by Basell's Catalloy™ process may contain over 25 weight percent and even in excess of 50 weight percent of elastomeric compound. For the exemplary Catalloy™ or impact polymers, the elastomeric component of the impact polymer may include, but are not limited to, acrylonitrile-chloroprene copolymer, acrylonitrile-isoprene copolymer, butadiene-acrylonitrile copolymer, chlorinated polyethylene, chlorosulfonated polyethylene, ethylene-ether polysulfite, ethylene-ethyl acrylate copolymer, ethylene polysulfite, ethylene-propylene copolymer, ethylene-propylene-diene terpolymer, fluoroclastomer, fluorosilicone, hexafluoropropylene-vinylidene fluoride copolymer, isobutene-isoprene copolymer, organopolysiloxane, acrylic ester-butadiene copolymer, polybutadiene, polychloroprene, polyepichlorohydrin, polyisobutene, polyisoprene, polyurethane, styrene-butadiene copolymer, styrene-chloroprene copolymer, polyethylene-butyl graft copolymer, styrene-butadiene-styrene triblock polymer, and blends thereof.

The other polymer component of the exemplary heterophasic copolymers may include, for example, ethylene- and propylene-based polymers including, but not limited to, polyolefins selected from the group consisting of propylene (PP) homopolymer, ethylene-propylene (EP) copolymer, ethylene-propylene-butylene (EPB) terpolymer, propylene-butylene (PB) copolymer, and blends thereof.

Other acceptable SPCs may include block copolymers, copolymers and terpolymers including C₂-C₈ alpha-olefins, and random copolymers. The SPCs may be the product of Ziegler-Natta or metallocene catalysis.

In one embodiment, the SPC may include an ethylene-propylene copolymer which has been crosslinked and is blended into a propylene matrix.

The SPC may include one or more of the following commercially available polymers: grades of VISTAMAXX™ such as VM6100 and VM3000 (available from ExxonMobil Chemical Company); VERSIFY™ (available from The Dow Chemical Company); Basell CATALLOY™ resins such as ADFLEX™ T100F, SOFTELL™ Q020F, CLYRELL™ SM1340 (available from Basell Polyolefins); propylene-butene-1 random copolymers such as Basell PB 8340 (available from Basell Polyolefins); Borealis BORSOFT™ SD233CF (available from Borealis); EXCEED™ 1012CA and 1018CA metallocene polyethylenes, EXACT™ 5361, 4049, 5371, 8201, 4150, 3132 polyethylene plastomers, EMCC 3022.32 low density polyethylene (LDPE) (all available from ExxonMobil Chemical Company); Total Polypropylene 3371 polypropylene homopolymer (available from Total Petrochemicals); and JPC 7500 and JPC XPM7800 both EPB terpolymers (available from Japan Polypropylene Corporation); PB copolymer such as Shell SRD4-141 (available from Shell Chemical Company).

### Core Layer

The core layer of a multilayered film is most commonly the thickest layer and provides the foundation of the multilayer film. The core layer may comprise a polymer selected from propylene polymer, ethylene polymer, polypropylene, isotactic polypropylene ("iPP"), high crystallinity polypropylene ("HCPP"), ethylene-propylene copolymers, ethylene propylene random copolymer, high density polyethylene ("HDPE"), linear low density polyethylene ("LLDPE"), or syndiotactic polypropylene (sPP), and combinations thereof. The polymers may be produced by Ziegler-Natta catalyst, metallocene catalyst, or any other suitable means.

Polypropylene copolymers, if used in the core layer, may include one or more comonomers. Preferably the comonomer is selected from one or more of ethylene or butene. The propylene will be present in such co- or terpolymers at greater than 90 wt%. Propylene polymers contemplated will generally have a melting point of at least about 140° C, or at least 150° C. Melt flow ratios of the polypropylenes may be in the range of 0.5 - 8, or 1.5 - 5 g/10 min. Melt indices of the ethylene based polymers may be in the range of 0.5 - 15 g/10 min. Examples of commercially available propylene polymers include, but are not limited to, Total 3371 (from Total Polypropylene Company), or P 4252 (from ExxonMobil Chemical Company).

Syndiotactic polypropylene may possess an isotacticity of less than 25%, or less than 15%, or less than 6%. The mean length of the syndiotactic sequences may be greater than 20, or greater than 25. Examples of commercially available syndiotactic polypropylene resins suited for use in the core layer include, but are not limited to, EOD 93-06 or EOD 95-01, available from Total Polypropylene Company.

Useful ethylene polymers include, but are not limited to HDPE M-6211 or HDPE M-6030 from Equistar Chemical Company, or HD-6704.67 from ExxonMobil Chemical Co.

Preferably the core layer comprises a high crystallinity polymer. A high crystallinity polymer is needed in the core layer to overcome the decrease in the multilayer film's tensile strength due to the increased softness of the matte tie layer. The high crystallinity polymer enables the multilayer film to maintain a stiffer modulus despite the softer more flexible polymers contained within the matte tie layer and sealant skin layer. An example of a suitable commercially available HCPP is Total Polypropylene 3270, available from Total Petrochemicals.

In a preferred embodiment, the core layer comprises a HCPP. In a preferred embodiment, the core layer comprises HCPP with an isotacticity expressed in mmmm pentads of at least 97%, more preferably of at least 97.5%, as measured by ¹³C-NMR.

In some embodiments, the core layer may be substantially free of the second polymer component "SPC".

The core layer generally has a thickness in the range of about 5 µm to 100 µm, or about 5 µm to 50 µm, or preferably in the range of about 10 µm to 30 µm.

The core layer may further comprise one or more additives. Preferred additives for the core layer include, but are not limited to, hydrocarbon resins, hydrocarbon waxes, opacifying or coloring agents, and cavitating agents.

### Matte Tie Layer

The tie layer of a multilayer film is typically used to connect two other, partially or fully incompatible, layers of the multilayer film structure, e.g., a core layer and a skin layer, and is positioned intermediate these other layers. In some embodiments, the matte tie layer is in direct contact, *i.e.*, contiguous, with the surface of the core layer. In other embodiments, another layer or layers may be intermediate the core layer and the matte tie layer.

The matte tie layer comprises at least one first polymer component ("FPC"), as described above. The matte tie layer further comprises a second polymer component ("SPC"), as described above, and, optionally, one or more other polymers. The FPC may be present preferably in the range of 10 wt% to 90wt%, or more preferably 25 wt% to 90wt%, or most preferably 50 wt% to 90 wt%. Amounts of the FPC of less than 10 wt% or greater than 90% are also permissible, depending upon the desired properties for the multilayer film product. The SPC is generally present in an amount of 90 wt% or less, or in the range of 10 wt% to about 90 wt% of the matte tie layer, or more preferably in amount of 10 wt% to 75 wt%, or 10 wt% to 50 wt%. In one embodiment, the matte tie layer comprises 60 wt% to 80 wt% of the FPC and 40 wt% to 20 wt% of the SPC. In a preferred embodiment, the matte tie layer comprises 70 wt% to 90 wt% of the FPC and 10 wt% to 30 wt% of the SPC.

The SPC is provided in the matte tie layer to facilitate improved seal strength and reduced sealing temperatures. The matte-tie layer comprises the SPC as a fractional component of the matte-tie layer. The SPC may be considered a softening or compliance-enhancing additive.

In some embodiments, the matte tie layer comprises a blend of blends, wherein the FPC is a blend and the SPC is a blend that have been blended together. The FPC may be a polymeric blend which contributes to the matte surface/roughness of the film as well as the sealability of the film. The SPC may generally be a blend which contributes to the seal strength and compliancy of the multilayer film.

The matte tie layer may contain very small (e.g. microscopic) raised areas in the form of fibers (e.g. elongated ridges) and/or in the form of nodules (e.g. essentially spherically shaped mounds). Those surfaces, which include primarily fibers, may be described as fibrillar, whereas those including primarily nodules, may be described as nodular.

When the multilayer film is oriented, the polymers within the matte tie layer separate forming islands of polymers which create a microroughness in the matte tie layer. In a preferred embodiment, the matte tie layer's microroughness protrudes through the sealant skin layer, giving the multilayer film a matte sealant surface.

The matte tie layer may have a thickness in the range of 0.5 µm to 25 µm, or 2.5 µm to 12 µm, or preferably in the range of 3 µm to 6 µm. However, in some thinner films, the matte tie layer may have a thickness of about 0.5 µm to 4 µm, or 1 µm to 2 µm.

The matte tie layer may further comprise one or more additives, such as, for example, opacifying agents, pigments, colorants, cavitating agents, slip agents, antioxidants, anti-fog agents, anti-static agents, anti-block agents, fillers, moisture barrier additives, gas barrier additives, and combinations thereof.

### Sealant Skin Layer

The sealant skin layer is generally one of the outermost layers of the multilayer film and may be used to form a seal. The seal may be heat-sealable, pressure-sealable, or may include a sealing agent such as an adhesive. While the term "sealant skin" is used to describe this layer, an adhesive is not required. In a preferred embodiment the sealant skin layer is contiguous to the matte tie layer. In other embodiments, one or more other layers may be intermediate the matte tie layer and the sealant skin layer. Generally, the sealant skin layer is on the same side of the core layer as the matte tie layer.

Preferably, the sealant skin layer comprises a polymer that has a reduced melting temperature as compared to more crystalline polymers. The sealant skin layer preferably includes a polymer that is suitable for heat-sealing or bonding to itself when crimped between crimp-sealer jaws. For example, suitable sealant skin layer polymers include: EP copolymer, PB copolymer, EPB terpolymer, and metallocene-catalyzed polypropylene homopolymer, Ziegler-Natta or metallocene catalyzed polymers, polypropylene homopolymers, ethylene-propylene copolymers, propylene-butylene copolymers, ethylene-butylene copolymer, ethylene-propylene-butylene ("EPB") terpolymers, ethylene vinyl acetate, and blends thereof. An example of a suitable commercially available EPB terpolymer is JPC 7794, available from Japan Polypropylene Corporation.

Heat sealable blends may also be utilized in the sealant skin layer. Thus, along with the copolymer or terpolymer, there can be, for example, other polymers, such as polypropylene homopolymer. Preferably, any polymer that is blended into the sealant skin layer is one that will not impair the film's seal performance. For example, isotactic polypropylene or HCPP should generally not be blended into the sealant skin layer as they may impair the heat sealability of the sealant skin layer.

The sealant skin layer may additionally or alternatively include materials selected from one or more of ethylene propylene random copolymers, low density polyethylene, linear low density polyethylene, medium density polyethylene, or combinations thereof.

The thickness of the sealant skin layer is typically in the range of about 0.1 µm to 7 µm, or 0.5 µm to 4 µm, or preferably 0.75 µm to 2 µm. In some film embodiments, the thickness of the sealant skin layer may be in the range of about 0.1 µm to 2 µm, or 0.1 µm to 0.5 µm.

The sealant skin layer may further comprise additives, such as, for example, anti-block agents, anti-static agents, slip agents, and combinations thereof.

### Second Tie Layer

In some embodiments, the multilayer film comprises an optional second tie layer. The second tie layer is generally located intermediate the core layer and the skin layer. Generally, the second tie layer is on the side of the core layer opposite of the matte tie layer.

The second tie layer may comprise a propylene polymer, such as an isotactic polypropylene. In some embodiments, the second tie layer comprises an adhesion promoting material such as a maleic anhydride modified polypropylene. An example of a suitable adhesion promoting material that is commercially available is ADMER™ AT1179A from Mitsui Chemicals America, Inc.

The thickness of the second tie layer may be in the range of 0.5 µm to 25 µm, or 1 µm to 12 µm, or preferably 2 µm to 10 µm. In other embodiments, the thickness of the second tie layer may be in the range of 0.5 µm to 8 µm, or 1 µm to 6 µm, or 1 µm to 4 µm.

The second tie layer may further comprise one or more additives such as, for example, opacifying agents, pigments colorants, cavitating agents, slip agents, antioxidants, anti-fog agents, anti-static agents, anti-block agents, fillers, moisture barrier additives, gas barrier additives, and combinations thereof.

### Second Skin Layer

A second skin layer is an optional layer and when present is generally the outermost layer of the multilayer film on the opposite side of the core layer from the sealant skin layer. The second skin layer may be contiguous to the core layer, or alternatively may be contiguous to one or more other layers, such as, the second tie layer.

The second skin layer may be provided to improve the film's barrier properties, processability, printability, and compatibility for metallization, coating, and lamination to other films or substrates. For example, the second skin layer may comprise a polymer that provides a printable or metallizable layer or that enhances processability of the film.

The second skin layer may include, but is not limited to, materials selected from one or more of PE polymer or copolymer, PP polymer or copolymer, EP copolymer, isotactic polypropylene, polypropylene random copolymer, propylene butene copolymer, ethylene propylene butene terpolymer, HDPE, EVA copolymer, LLDPE, medium density polyethylene, EVOH, or combinations thereof.

For coating and printing functions, the second skin layer may preferably be a copolymer or terpolymer that can be surface treated. For metallizing or barrier properties, a HDPE, PP, PB copolymer, or EVOH may be preferred.

The thickness of the second skin layer depends upon the intended function of the layer, but is usually in the range of 0.1 µm to 5 µm, or 0.3 µm to 3 µm, or 0.5 µm to 2 µm.

The second skin layer may further comprise additives such as, for example, anti-block agents, anti-static agents, slip agents, and combinations thereof.

### Orientation

The multilayer film may be uniaxially or biaxially oriented. Orientation in the direction of extrusion is known as machine direction ("MD") orientation. Orientation perpendicular to the direction of extrusion is known as transverse direction ("TD") orientation. Orientation may be accomplished by stretching or pulling a film first in the MD followed by the TD. Orientation may be sequential or simultaneous, depending upon the desired film features. Preferred orientation ratios are commonly from between about three to about six times in the MD and between about four to about ten times in the TD.

Blown films may be oriented by controlling parameters such as take up and blow up ratio. Cast films may be oriented in the MD direction by take up speed, and in the TD through use of tenter equipment. Blown films or cast films may also be oriented by tenter-frame orientation subsequent to the film extrusion process, in one or both directions. Typical commercial orientation processes are BOPP tenter process and LISIM technology.

### Surface Treatment

One or both of the outer exposed surfaces of the multilayer film may be surface-treated to increase the surface energy of the film to render the film receptive to metallization, coatings, printing inks, and/or lamination. The surface treatment can be carried out according to one of the methods known in the art. Preferred methods include, but are not limited to, corona discharge, flame treatment, plasma treatment, chemical treatment, or treatment by means of a polarized flame.

In a preferred embodiment, the outermost surface of the film that is opposite the matte tie layer is surface treated. Thus, in a preferred embodiment the sealant skin layer is not surface treated.

### Metallization

One or both of the outer exterior surfaces of the multilayer film may be metallized. Generally, the metallized layer is one of the outer skin and/or sealant layers. However, if no skin or sealant layer is present, the surface of a core layer may be metallized. Such layers may be metallized using conventional methods, such as vacuum deposition of a metal layer such as aluminum, copper, silver, chromium, or mixtures thereof.

Metallization is generally applied to which ever outermost surface of the film that has been treated. Metallization or coatings may be applied alone or in some cases together. When metallization and coatings are applied together, either may be applied first, followed by the other. In some embodiments, the film may first be treated, for example by flame treatment, and then be treated again in the metallization chamber, for example by plasma treatment, immediately prior to being metallized.

### Coatings

One or more coatings, such as for barrier, printing, and/or processing, may be applied to one or both of the outer surfaces of the multilayer films. Such coatings may include acrylic polymers, such as ethylene acrylic acid ("EAA"), ethylene methyl acrylate copolymers ("EMA"), polyvinylidene chloride ("PVdC"), poly(vinyl)alcohol ("PVOH"), ethylene(vinyl)alcohol ("EVOH"), and combinations thereof.

Before applying the coating composition to the appropriate substrate, the outer surface of the film may be treated to increase its surface energy. This treatment may help to ensure that the coating layer will be strongly adhered to the outer surface of the film, and thus reduce the possibility of the coating peeling or being stripped from the film. This treatment can be accomplished by employing known techniques, such as flame treatment, plasma, corona discharge, film chlorination, treatment with oxidizing agents such as chromic acid, hot air or steam treatment, and the like. A preferred method is corona discharge where the film surface is exposed to a high voltage corona discharge while passing the film between a pair of spaced electrodes. After surface treatment, the coating composition may then be applied thereto.

An intermediate primer coating may be applied to the multilayer film. This is particularly useful in applications where a greater coating-to-film adherence is desired than that resulting from surface treatment of the film. Before applying the primer the film may first be treated to provide increased active adhesion sites on the film's surface (thereby promoting primer adhesion). Then a continuous coating of a primer material may be applied to the surface treated film surface. Examples of useful primer materials are well known in the art and include, but are not limited to, epoxy and poly(ethylene imine) materials. The primer provides an overall adhesively active surface for thorough and secure bonding with the subsequently applied coating composition. The primer may be applied to the film by conventional solution methods, for example, by roller application.

The coatings are preferably applied by an emulsion coating technique, but may also be applied by co-extrusion, and/or lamination. The coating composition may be applied to the film as a solution or in any other conventional manner, such as by gravure coating, roll coating, dipping, spraying, and the like. Any excess aqueous solution can be removed by squeeze rolls, doctor knives, and the like.

The film can be stretched in the MD, coated with the coating composition and then stretched perpendicularly in the TD. In another embodiment, the coating can be carried out after biaxial orientation is complete.

The coating composition may be applied in such as amount so that there will be deposited upon drying a smooth, evenly distributed layer. The coating may be dried by hot air, radiant heat, or by any other conventional means. Generally, the coating composition is on the order of 0.2 µm to 5 µm in thickness, or in the range of 0.31g to 5.43g of coating per square meter of film. Useful coatings may have coating weights in the range of 0.5 g/m² to 1.6 g/m² for conventional PVOH coatings, 0.78 g/m² to 2.33 g/m² for conventional acrylic and low temperature seal coatings, and 1.6 g/m² to 6.2 g/m² for conventional PVdC coatings.

### Additives

One or more layers of the multilayer film may further contain one or more additives. Examples of useful additives include, but are not limited to, opacifying agents, pigments, colorants, cavitating agents, slip agents, antioxidants, anti-fog agents, anti-static agents, anti-block agents, moisture barrier additives, gas barrier additives, hydrocarbon resins, hydrocarbon waxes, fillers such as calcium carbonate, diatomaceous earth and carbon black, and combinations thereof. Such additives may be used in effective amounts, which vary depending upon the property required.

Examples of suitable opacifying agents, pigments, or colorants include, but are not limited to, iron oxide, carbon black, aluminum, titanium dioxide, calcium carbonate, talc, and combinations thereof.

Cavitating agents or void-initiating particles may be added to one or more layers of the multilayer film to create an opaque film. Preferably, the cavitating agents or void-initiating particles are added to the core layer. Generally, the cavitating or void-initiating additive includes any suitable organic or inorganic material that is incompatible with the polymer material(s) contained in the layer(s) to which the cavitating or void-initiating additive is added, at the temperature of biaxial orientation. Examples of suitable void-initiating particles include, but are not limited to, polybutylene teraphthalate ("PBT"), nylon, cyclic-olefin copolymers, solid or hollow pre-formed glass spheres, metal beads or spheres, ceramic spheres, calcium carbonate, talc, chalk, or combinations thereof. The average diameter of the void-initiating particles is typically in the range of about 0.1 µm to 13 µm. The particles may be of any desired shape, or preferably they are substantially spherical in shape. This does not mean that every void is the same size. It means that generally each void tends to be of like shape when like particles are used even though they vary in dimensions. These voids may assume a shape defined by two opposed and edge contacting concave disks.

Alternatively, one or more layers of the multilayer film may be cavitated by beta nucleation, which includes creating beta-form crystals of polypropylene and converting at least some of the beta-crystals to alpha-form polypropylene crystals thus leaving small voids remaining after the conversion. Preferred beta-cavitated embodiments also comprise a beta-crystalline nucleating agent. Substantially any beta-crystalline nucleating agent ("beta nucleating agent" or "beta nucleator") may be used.

Slip agents that may be used include, but are not limited to, higher aliphatic acid amides, higher aliphatic acid esters, waxes, silicone oils, and metal soaps. Such slip agents may be used in amounts in the range of 0.1 wt% to 2 wt% based on the total weight of the layer to which it is added. An example of a fatty acid slip additive that may be used is erucamide. In one embodiment, a conventional polydialkylsiloxane, such as silicone oil or silicone gum, additive having a viscosity of 10,000 to 2,000,000 cSt is used.

Useful antiblock additives include, but are not limited to, silica-based products such as inorganic particulates such as silicon dioxide, calcium carbonate, magnesium silicate, aluminum silicate, calcium phosphate, and the like. In some embodiments, non-migratory slip agents may be used as the antiblock additive in one or more of the outer surface layers of the multilayer film or in one or more of the tie layers. Non-migratory means that these agents do not generally change location throughout the layers of the film in the manner of migratory slip agents. A preferred non-migratory slip agent is polymethyl methacrylate ("PMMA"). The non-migratory slip agent may have a mean particle size in the range of 0.5 µm to 15 µm, or 0.5 µm to 13 µm, or 1 µm to 10 µm, or 1 µm to 5 µm, or 2 µm to 4 µm, depending on the layer's thickness and desired slip properties. In some embodiments, the size of the particles in the non-migratory slip agent may be greater than 10% of the thickness of the surface layer containing the slip agent, or greater than 20% of the layer's thickness, or greater than 40% of the layer's thickness, or greater than 50% of the layer's thickness, or greater 100% of the layer's thickness. Generally spherical, particulate non-migratory slip agents are contemplated. A commercially available example of a PMMA resins is EPOSTAR™ which is available from Nippon Shokubai Co., Ltd. of Japan. Other useful antiblock additives include polysiloxanes and non-meltable crosslinked silicone resin powder, such as TOSPEARL™, which is commercially available from Toshiba Silicone Co., Ltd. Antiblocking agents may be effective in amounts up to about 30,000 ppm of the layer to which it is added.

An example of a suitable antioxidant includes phenolic anti-oxidants, such as IRGANOX® 1010, which is commercially available from Ciba-Geigy Company of Switzerland. Such an antioxidant may be used in an amount in the range of 0.1 wt% to 2 wt%, based on the total weight of the layer to which it is added.

Anti-static agents that may be used include alkali metal sulfonates, polyether-modified polydiorganosiloxanes, polyalkylpheylsiloxanes, tertiary amines, glycerol mono-sterate, blends of glycerol mono-sterate and tertiary amines, and combinations thereof. Such anti-static agents may be used in amounts in the range of about 0.05 wt% to 3 wt%, based on the total weight of the layer to which the anti-static is added. An example of a suitable anti-static agent is ARMOSTAT™ 475, commercially available from Akzo Nobel.

Examples of useful fillers include but are not limited to, finely divided inorganic solid materials such as silica, fumed silica, diatomaceous earth, calcium carbonate, calcium silicate, aluminum silicate, kaolin, talc, bentonite, clay, and pulp.

Suitable moisture and gas barrier additives may include effective amounts of low-molecular weight resins, hydrocarbon resins, particularly petroleum resins, styrene resins, cyclopentadiene resins, and terpene resins.

The multilayer film may further contain one or more hydrocarbon resins ("HCR") in one or more layers. In a preferred embodiment, the core layer comprises one or more HCR. The HCR may serve to enhance or modify the flexural modulus, improve processability, or improve barrier properties of the multilayer film. Preferably the HCR is a low-molecular weight hydrocarbon that is compatible with the polymers contained in the layer to which the HCR has been added. Optionally, the HCR may be hydrogenated. Suitable HCRs include, but are not limited to, petroleum resins, terpene resins, styrene resins, and cyclopentadiene resins. The HCR may have a number average molecular weight less than 5000 g/mole, preferably less than 2000 g/mole, and most preferably in the range of about 500 g/mole to about 1000 g/mole. The HCR may be natural or synthetic. In one embodiment, the HCR has a softening point in the range of 60°C to 180°C.

The multilayer film may also contain a hydrocarbon wax in one or more layers. In a preferred embodiment, the core layer comprises a hydrocarbon wax. The hydrocarbon wax may be either a mineral wax or a synthetic wax. Polyethylene type wax may have an average chain length of 22 to 65 carbon atoms, or 22 to 40 carbon atoms; a molecular weight in the range of 300 to 800 g/mole; and a melting point in the range of 52°C to about 88°C. Hydrocarbon waxes may include paraffin waxes and microcrystalline waxes. Preferred paraffin waxes typically include a mixture of normal and branched paraffins, with the normal paraffin content generally in the range of 35 wt% to 90 wt%. Typically, paraffin waxes having a broad molecular weight distribution are preferred as they generally provided better barrier properties than paraffin waxes with a narrow molecular weight distribution.

Optionally, one or more of the outer surface layers may be compounded with a wax or coated with a wax-containing coating, for lubricity, in amounts in the range of 2 wt% to 15 wt% based on the total weight of the layer.

### Industrial Application

The multilayer films may be useful as substantially stand-alone film webs or they may be coated, metallized, and/or laminated to other film structures. Multilayer films according to the present disclosure may be prepared by any suitable means. Preferably, the multilayer film is co-extruded, oriented, and then prepared for its intended use such as by coating, printing, slitting, or other converting methods. Preferred methods comprise co-extruding, then casting and orienting the multilayer film.

In one embodiment, the multilayer film may be formed by co-extruding the core layer, the matte tie layer, and the sealant skin layer together with any additional layers through a flat sheet extruder die at a temperature in the range of 200°C to 260°C, casting the film onto a cooling drum and quenching the film. The sheet is then stretched 3 to 7 times its original size, in the machine direction (MD), followed by stretching 5 to 10 times its original size in the transverse direction (TD). The film is then wound onto a reel. Optionally, one or both of the external surfaces may be coated and/or flame treated or corona treated before winding.

In general, the multilayer film comprises at least three layers: the core layer, the matte tie layer, and a sealant skin layer, wherein the matte tie layer is intermediate the core layer and the sealant skin layer. Additional layers may be incorporated in the multilayer film; for example, the multilayer film may comprise a second tie layer and/or a second skin layer, wherein the second tie layer is intermediate the core layer and the second skin layer and is on the side of the core layer opposite of the matte tie layer. The core layer generally represents about 40 to about 90 percent of the thickness of the total film.

In one embodiment, the multilayer film is a five-layer film with wherein the second skin layer is an EVOH metallizable skin for improved barrier properties and there is a second adhesion promoting tie layer between the EVOH skin and the core layer. Also, white opaque films can be made by adding a cavitating agent to the core layer.

The multilayer film may be used as a flexible packaging film to package an article or good, such as a food item or other product. In some applications, the film may be formed into a pouch type of package, such as may be useful for packaging a beverage, liquid, granular, or dry-powder product.

The film may also be used as labeling or imaging film. The film may be printed by any conventional means, contemplated printing means include letterpress, offset, silk screen, electrostatic and photographic methods. Specific printing methods contemplated include thermal dye transfer (including dye sublimation), lithographic printing, flexographic printing, gravure printing, hot stamping, valley printing, roll-leaf printing and spanishing. Polyolefins are normally treated before printing in order to make them receptive to inks. Treating methods include casing, electronic treating and flame treating.

For some applications, it may be desirable to laminate the multilayer films to other polymeric film or paper products for purposes such as package decor including printing and metallizing. These activities are typically performed by the ultimate end-users or film converters who process films for supply to the ultimate end-users.

In one embodiment, a method of preparing a multilayer film may comprise the steps of co-extruding at least: a core layer, a matte tie layer, and a sealant skin layer, wherein the matte tie layer is intermediate the core layer and the sealant skin layer, and wherein the matte tie layer comprises a FPC and a SPC. The method may further comprise the step of orienting the co-extruded, multilayer film in at least one direction. The method may further comprise additionally co-extruding a second tie layer and/or a second skin layer.

The method may further comprise the steps of enclosing a product or article within at least a portion of the co-extruded film, engaging a first portion of the skin layer with a second portion of the skin layer at a seal area, and applying pressure and heat at the seal area, optionally for a determined duration of time, to cause the first portion to engage with the second portion to create at least one of a fin seal, a lap seal, and a crimp seal in the seal area.

Heat seals useful in packaging are commonly lap, fin, or crimp seals. Most frequently, vertical form fill and seal and/or horizontal form fill and seal (VFFS and/or HFFS, respectively) useful in snack packaging will employ a fin seal or two crimp seals. For extended shelf life, a hermetic seal is desirable. A hermetic seal is generally one that does not permit the passage of a gas.

### EXAMPLES

The inventive multilayer films will now be further described with reference to the following non-limiting examples. When possible, standard ASTM tests were used to determine physical properties of the multilayer film. Table 1 summarizes testing procedures used in the Examples.

The kinetic coefficient of friction ("COF") was determined according to ASTM 1895 with 25 seconds of measuring time using a TMI Model 32-06 lab slip and friction testing equipment (commercially available from Testing Machines Inc. of Ronkonkoma, New York). A 200 g sled comprised of 3/16 inch sponge rubber with 17-24 psi compressibility is preferred.

Seal strength is a measure of the force required to separate a test strip of a material containing a seal. The seal strength test is performed on an untreated surface that is sealed to itself. A LAKO™ Heat Sealer (Model SL-10), (commercially available from Lako Tool & Manufacturing, Inc. of Perrysburg, Ohio), may be used to form a seal and evaluate its seal strength. The LAKO™ Heat Sealer is an automated film testing device that is capable of forming a film seal, determining the seal strength, and generating a seal profile from film samples. The operating range is from ambient to 199°C, sealing pressure of 0.04 MPa to 2.69 MPa, and a dwell time of 0.2 seconds to 20 seconds.

The surface roughness (Ra) of the film samples were measured using a surface profilometer (Mahr Federal Perthometer M2 with PFM Drive Unit) according to ISO 4287. The film sample to be tested should be wrinkle and contamination free. Multiple locations are measured across the sample in the TD. The pick-up (stylus) is placed in the measuring position. The tracing-arm is placed on the sample so that the stylus pulls across the TD of the sample surface to be measured. Testing is performed from the right edge of the film surface to center to left edge of the film, in order to prevent contamination of the testing area from the stylus. The Ra value is the arithmetic average of the absolute values of the roughness profile ordinates of the film's surface.

The Mahr Federal Perthometer was also used to determine the peak count (Pc) of the film. The peak count is a unitless measure of the number of roughness profile elements per one inch (2.54 cm) of film. Even though the stylus will travel over a shorter distance, the instrument uses a ratio-and-proportion algorithm to determine what the counts would be over one inch (2.54 cm). In order to determine the peak count, a bandwith of ±0.51 µm was used for the bandwidth that is symmetrical about the mean line for a total bandwith of 1.02 µm. To be counted as a peak, the peak and valley combination must pass through both the top and bottom of this bandwith.

The procedure for Differential Scanning Calometry ("DSC") is described as follows. From about 6 mg to about 10 mg of a sheet of the polymer pressed at approximately 200°C to 230°C is removed with a punch die. This is annealed at room temperature for at least 2 weeks. At the end of this period, the sample is placed in a Differental Scanning Calorimeter (TA Instruments Model 2920 DSC) and cooled to about -50°C to about -70°C. The sample is heated at 20°C/min to attain a final temperature of about 200°C to about 220°C. The thermal output is recorded as the area under the melting peak of the sample which is typically peaked at about 30°C to about 175°C and occurs between the temperatures of about 0°C and about 200°C and is a measure of the heat of fusion expressed in Joules per gram of polymer. The melting point is recorded as the temperature of the greatest heat absorption within the range of melting of the sample.

Percent crystallinity is derived from the thermal output measurement of the DSC procedure described above. The thermal output measurement for the highest order of polypropylene is estimated at 189 J/g, *i.e*., 100% crystallinity is equal to 189 J/g.

Techniques for determining the molecular weight distribution ("MWD") may be found in U.S. Patent 4,540,753.

The hermetic operating window may be determined using devices such as a HAYSSEN™ Ultimate II VFFS machine (commercially available from Hayssen Packaging Technologies) at the speed of 55 bags/min. In the examples, the multilayer films were extrusion laminated on the outside of a 17 to 18 µm biaxially oriented polypropylene film (17 ML 400 or 70 LCX). Empty bags measuring approximately 35.6 cm by 13.3 cm were filled with air and sealed at specified temperatures for lap and/or fin seals at the back of the bag and crimp seal on both ends of the bag. Twenty bags were put under water at 20.3 cmHg vacuum for 60 seconds. If no bubbles were observed from all 20 of the submersed bags, the seal was considered a hermetic seal under the test conditions. If even one of the twenty bags bubbled, the seal was not hermetic. The temperature settings were modified incrementally and the test is repeated until the hermetic area is determined. Test results are recorded on a graph with tested crimp seal temperatures on the x-axis in increasing increments of 10 °F and lap seal temperatures on the y-axis in increasing increments of 10 °F. The graph is proportionally divided into contiguous, non-overlapping boxes (cells). Each test resulting in a hermetic seal is represented by a shaded cell on the graph corresponding to the lap and/or fin seal and crimp seal temperature settings. The final hermetic operating window is determined by calculating the total of all filled cells on the graph.

**TABLE 1 - Test Methods**

| Parameter | Units | Test Method |
|---|---|---|
| Kinetic COF | | See text. |
| Roughness, Ra | µm | ISO 4287 |
| Haze | % | ASTM D1003 |
| Gloss at 45° | | ASTM D-2457 |
| Hermetic Operating Window | # of Cells | See text. |
| Seal Strength at 260 °F | gm/in | See text. |
| Density | g/cm³ | ASTM-1505 |
| Heat of Fusion | J/g | By DSC, See text. |
| Melting Point | °C | By DSC, See text. |
| Melt Flow Rate | g/10 min | ASTM D-1238, 2.16 kg at 230°C with a 1 minute preheat on the sample to provide a steady temperature for the duration of the experiment. |
| Flexural Modulus | MPa | ASTM D-790 |
| Peak count | | See text. |
| Elongation at Break | % | ASTM D-638 |

A listing of various components used in the Examples is in Table 2.

**TABLE 2 - Various Components in the Multilayer Film**

| Material | Brief Description | Commercial Source |
|---|---|---|
| JPC XPM3140 | Matte resin - blend of EPB, LDPE, and HDPE. | Japan Polypropylene Corp. |
| Adflex T100F | Impact copolymer. | Basell |
| Borseal™ TD908BF | EPB terpolymer. | Borealis |
| XOM-4612 | Isotactic polypropylene. | ExxonMobil Chemical Company |
| 3371 | Isotactic polypropylene. | Total Polypropylene Company |
| 3270 | High Crystalline Polypropylene (HCPP). | Total Polypropylene Company |
| JPC XPM3420 | Matte resin - blend of EPB, LDPE, and HDPE. | Japan Polypropylene Corp. |
| Matif 67 | Matte resin. | Ampacet |
| JPC XPM7794 | EPB terpolymer. | Japan Polypropylene Corp. |
| Epostar MA1010 | PMMA | Nippon Shokubai |
| Bicor® 70 LCX | OPP film. | ExxonMobil Chemical Co. |
| Bicor® 17 ML 400 | OPP film. | ExxonMobil Chemical Co. |
| Clyrell RC 1601 | PB copolymer. | Basell |
| MB50-001 | High molecular weight silicone gum (having a polyethylene matrix). | Dow Coming |

Various coextruded biaxially oriented multilayer films were made and tested. The multi-layer films were melt coextruded, quenched on a casting drum and subsequently reheated in the machine direction orienter to about 85°C to about 105°C. The film was then stretched in the MD at 4.5 to 5.5 times and further annealed, in the annealing section of the machine direction orienter. The MD stretched film was subjected to further transverse direction orientation via conventional tenter frame at 7 to 9 times in the TD. The typical transverse direction preheat temperature is about 155°C to about 180°C, stretching temperature is about 145°C to about 165°C, and standard annealing temperature is about 165°C to 170°C. The metallizable skin layer was then treated by a conventional flame treatment method and then metallized by vacuum deposition of aluminum.

A representative structure of Films 1 to 4 (films not according to the invention) is shown in **Table 3.** Films 5 to 7 have the structure shown in **Table 4.** Film 8 is a comparative example and has the structure shown in **Table 5.** Film 9 is a comparative example and has the structure shown in **Table 6. Table 7** illustrates the film structures of Films 10 to 11. The films were tested for a variety of properties with the results shown in **Table 8.**

**TABLE 3 - Representative Structure of Films 1 to 4 (Films not according to the invention)**

| Layer | Function | Components | Thickness |
|---|---|---|---|
| 1 | Sealant Skin | JPC XPM7794 + optional slip and antiblock | 2.0 µm |
| 2 | Matte Tie Layer | 100% JPC XPM3140 | 2.5 to 5.1 µm |
| 3 | Core | 80% Total 3270 + 20% Total 3371 | 17.3 µm |
| 4 | Metallizable Skin | Basell Clyrell RC1601 | 0.6 µm |
| 5 | Surface Treatment | Flame Treatment | |
| 6 | Vacuum Deposited Metal | Aluminum | |

**TABLE 4 - Representative Structure of Films 5 to 7**

| Layer | Function | Components | Thickness |
|---|---|---|---|
| 1 | Sealant Skin | JPC XPM7794 + 5,000ppm MA 1010 + 5,000 ppm MB 50-001 | 2.0 µm |
| 2 | Matte Tie Layer | 25 to 75% JPC XPM3140 | 5.1 µm |
| | | 75 to 25% Adflex T100F | |
| 3 | Core | 80% Total 3270 + 20% XOM-4612 | 17.3 µm |
| 4 | Metallizable Skin | 100% XOM-4612 | 0.6 µm |
| 5 | Surface Treatment | Flame Treatment | |
| 6 | Vacuum Deposited Metal | Aluminum | |

**TABLE 5 - Representative Structure of Film 8**

| Layer | Function | Components | Thickness |
|---|---|---|---|
| 1 | Sealant Skin | JPC XPM7794 + 5,000ppm MA 1010 + 5,000 ppm MB50-001 | 2.0 µm |
| 2 | Tie Layer | 100% Adflex T100F | 5.1 µm |
| 3 | Core | 80% Total 3270 + 20% XOM-4612 | 17.3 µm |
| 4 | Metallizable Skin | 100% XOM-4612 | 0.6 µm |
| 5 | Surface Treatment | Flame Treatment | |
| 6 | Vacuum Deposited Metal | Aluminum | |

**TABLE 6 - Representative Structure of Film 9**

| Layer | Function | Components | Thickness |
|---|---|---|---|
| 1 | Sealant Skin | JPC XPM7794 | 1.5 µm |
| 2 | Core | 80% Total 3270 + 20% Total 3371 | 22.8 µm |
| 3 | Metallizable Skin | Basell Clyrell RC 1601 | 0.6 µm |
| 4 | Surface Treatment | Flame Treatment | |
| 5 | Vacuum Deposited Metal | Aluminum | |

**TABLE 7 - Representative Structure of Films 10 to 11**

| Layer | Function | Components | Thickness |
|---|---|---|---|
| 1 | Sealant Skin | JPC XPM7794 + 5,000ppm MA 1010 | 2.0 µm |
| 2 | Matte Tie Layer | 75% (JPC XPM3420 or Matif 67) | 5.0 µm |
| | | 25% Adftex T100F | |
| 3 | Core | 80% Total 3270 + 20% XOM-4612 | 17.4 µm |
| 4 | Metallizable Skin | 100% Borealis TD908BF | 0.6 µm |
| 5 | Surface Treatment | Flame Treatment | |
| 6 | Vacuum Deposited Metal | Aluminum | |

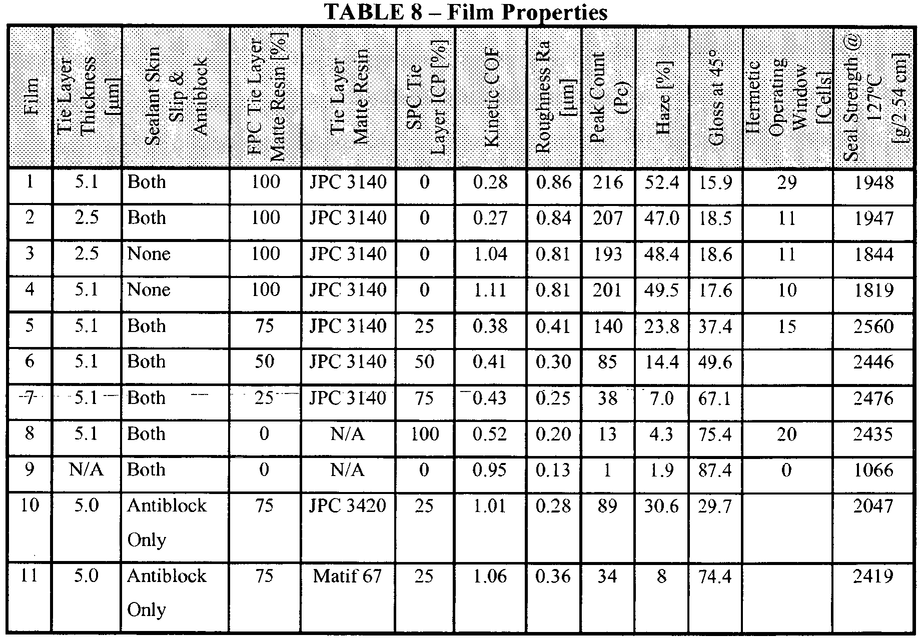

Low seal strength was expected due to low cohesive strength caused by the incompatible polymers in the matte tie layer. However, in Films 5-7 and 10-11 excellent seal strength of greater than 2,000 g/ 2.54 cm was achieved on the LAKO at 127°C with a blend of EPB terpolymer, HDPE, and LDPE (JPC XPM3140 resin) in the matte tie layer.

In particular, Films 5-7 which had a matte tie layer with at least 75% of the matte resin and 25% or less of the impact copolymer, demonstrated a seal strength at 127°C of greater than 2400 g/2.54 cm.

The disclosed films generally have high seal strength and high surface roughness. In the examples, a seal strength of at least 1,400g/2.54 cm at 127°C, a surface roughness (Ra) of at least 0.25 µm, and a peak count of at least 30 were needed in order for the film to have acceptable processability. Films 1-7 and 10-11 all meet these criteria. Examples 1-4 (not according to the invention) had a seal strength of between 1,800 g/2.54 cm and 2,000 g/2.54cm, a surface roughness (Ra) greater than 0.80, and a peak count greater than 190. When less than 100% of the FPC was used in the tie layer and more of the SPC was used, the surface roughness was lower and the seal strength was higher. In Films 5-7 a seal strength of greater than 2,400 g/2.54cm was achieved, while still having acceptable surface roughness for processability. Despite the high seal strength of Film 8, without the FPC the surface roughness was too low, leading to a film which is not easily processed with good manufacturing efficiencies. Film 9 had neither the FPC nor the SPC. This film did not have enough seal strength for all packaging applications. Films 10 and 11 are examples which have acceptable seal strength and roughness, by utilizing a different grade of matte resin for the FPC. In some applications, the film's COF may be important, and the use of both a slip component and an antiblock in the sealant skin layer may be necessary to achieve low COF values. In some applications, hermeticity is needed, which can be achieved when using at least 25% of the ICP in the tie layer.

All patents and patent applications, test procedures (such as ASTM methods, UL methods, and the like), and other documents cited herein are fully incorporated by reference to the extent such disclosure is not inconsistent with this disclosure and for all jurisdictions in which such incorporation is permitted.

When numerical lower limits and numerical upper limits are listed herein, ranges from any lower limit to any upper limit are contemplated.

## Claims

1. A multilayer film comprising:
a) a core layer;
b) a sealant skin layer; and
c) a matte tie layer, wherein the matte tie layer is intermediate to the core layer and the sealant skin layer, said matte tie layer comprising at least one first polymer component and at least one second polymer component;
wherein the multilayer film has a surface roughness (Ra) of at least 0.25 µm, as determined according to ISO 4287, and a peak count (Pc) of at least 30 as measured by surface profilometry (as disclosed herein) and wherein a seal of the sealant layer to itself has a seal strength (as disclosed herein) of greater than 1400 g/2.54 cm at 127°C, and herein the first polymer component comprises a blend of at least two incompatible polymers.

2. The multilayer film of claim 1, wherein the first polymer component is a blend of high density polyethylene with a propylene homopolymer, copolymer or terpolymer.

3. The multilayer film of claim 2, wherein the first polymer component includes polyethylene with different densities.

4. The multilayer film of any one of claims 1-3, wherein the first polymer component comprises a blend of at least one ethylene-propylene-butene terpolymer and at least one polyethylene.

5. The multilayer film of any one of claims 1-4, wherein the first polymer component comprises a blend of at least one ethylene-propylene-butene terpolymer, at least one high density polyethylene, and at least one low density polyethylene.

6. The multilayer film of any one of claim 1-5, wherein the second polymer component is in the range of 10 wt% to 75 wt% of said matte tie layer.

7. The multilayer film of any one of claims 1-3, wherein the first polymer component is in the range of 25 wt% to 90 wt% of said matte tie layer.

8. The multilayer film of any one of claims 1-7, wherein the second polymer component comprises a polymer having at least one of the following properties:
i. Melting point temperature, "Tₘ" less than or equal to 142°C;
ii. Vicat Softening Point (ASTM D1525) of less than or equal to 108°C; and/or
iii. Flexural Modulus (ASTM D790) of less than or equal to 550 MPa.

9. The multilayer film of any one of claims 1-8, wherein the second polymer component comprises a polymer having at least one of the following sets of properties:
i. Density in the range of 0.850 g/cm³ to 0.940 g/cm³, a DSC melting point in the range of 40°C to 160°C, and a melt flow rate in the range of 2 dg/min. to 100 dg/min.;
ii. A propylene-ethylene copolymer including 75 wt% to 96 wt% propylene, 4 wt% to 25 wt% ethylene and having a density in the range of 0.850 g/cm³ to 0.900 g/cm³;
iii. A flexural modulus of not more than 2100 MPa and an elongation of at least 300%;
iv. Isotactic stereoregularity, 84 wt% to 93 wt% propylene, 7 wt% to 16 wt% ethylene, a DSC melting point in the range of 42°C to 85°C, a heat of fusion less than 75 J/g, crystallinity in the range of 2% to 65%, and a molecular weight distribution of 2.0 to 3.2;
v. A polymer blend, comprising at least one polymer (A) and at least one polymer (B), polymer (A) comprising 60 wt% to 98 wt% of the blend, and polymer (A) comprising 82 wt% to 93 wt% of units derived from propylene and 7 wt% to 18 wt% of units derived from a comonomer selected from the group consisting of ethylene and an unsaturated monomer other than ethylene, and polymer (A) is further characterized as comprising crystallizable propylene sequences, and polymer (B) comprising an isotactic thermoplastic polymer other than polymer (A); and
vi. A polymer blend, comprising at least one polymer (A) and at least one polymer (B), polymer (A) comprising 60 wt% to 98 wt% of the blend, and polymer (A) comprising 65 wt% to 96 wt% of units derived from propylene and 4 wt% to 35 wt% of units derived from a comonomer selected from the group consisting of ethylene and an unsaturated monomer other than ethylene, and polymer (A) is further characterized as comprising crystallizable propylene sequences, and polymer (B) comprising an isotactic thermoplastic polymer other than polymer (A).

10. The multilayer film of any one of claims 1-9, wherein the core layer comprises a high-crystallinity polypropylene.

11. The multilayer film of any one of claims 1-10, wherein the seal of the sealant layer to itself has a seal strength of greater than 2000 g/2.54 cm at 127°C.

12. The multilayer film of any one of claims 1-11, wherein at least one of said film's outermost surfaces is treated with a treatment selected from at least one of corona discharge, flame treatment, plasma treatment, chemical treatment, or treatment by means of a polarized flame.

13. The multilayer film of any one of claims 1-12, wherein said film is coated with a coating selected from one of ethylene acrylic acid, ethylene methyl acrylate copolymers, polyvinylidene chloride, polyvinyl alcohol, ethyl vinyl alcohol, or combinations thereof.

14. The multilayer film of any one of claims 1-13, wherein the film is metallized by vacuum deposition of aluminum.

15. The multilayer film of any one of claims 1-14, wherein the film is biaxially oriented.

16. Use of the films of any one of claims 1-15 as packaging, labeling or imaging film.

## Patentansprüche

1. Mehrschichtiges Flächengebilde, aufweisend:
a) eine Kernschicht;
b) eine Haut-Siegelungsschicht; und
c) eine matte Verbindungsschicht, wobei die matte Verbindungsschicht zwischen der Kernschicht und der Haut-Siegelungsschicht angeordnet ist, wobei die matte Verbindungsschicht mindestens eine erste Polymerkomponente und mindestens eine zweite Polymerkomponente aufweist;
wobei das mehrschichtige Flächengebilde eine Oberflächenrauigkeit (Ra) von mindestens 0,25 µm, bestimmt gemäß ISO 4287, und eine Peak-Zahl (Pc) von mindestens 30, gemessen durch Oberflächen-Profilometrie, aufweist (wie hierin offenbart), und wobei eine Siegelung der Siegelungsschicht an sich selbst eine Siegelfestigkeit (wie hierin offenbart) von mehr als 1400 g / 2,54 cm bei 127 °C aufweist, und wobei die erste Polymerkomponente eine Mischung aus mindestens zwei inkompatiblen Polymeren umfasst.

2. Mehrschichtiges Flächengebilde nach Anspruch 1, wobei die erste Polymerkomponente eine Mischung aus hochdichtem Polyethylen mit einem Polypropylen-Homopolymer, -Copolymer oder -Terpolymer ist.

3. Mehrschichtiges Flächengebilde nach Anspruch 2, wobei die erste Polymerkomponente Polyethylen verschiedener Dichten aufweist.

4. Mehrschichtiges Flächengebilde nach einem der Ansprüche 1 - 3, wobei die erste Polymerkomponente eine Mischung aus mindestens einem Ethylen-Propylen-Buten-Terpolymer und mindestens einem Polyethylen umfasst

5. Mehrschichtiges Flächengebilde nach einem der Ansprüche 1 - 4, wobei die erste Polymerkomponente eine Mischung aus mindestens einem Ethylen-Propylen-Buten-Terpolymer, mindestens einem hochdichten Polyethylen und mindestens einem niedrigdichten Polyethylen umfasst.

6. Mehrschichtiges Flächengebilde nach einem der Ansprüche 1 - 5, wobei die zweite Polymerkomponente im Bereich von 10 Gew.-% bis 75 Gew.-% der matten Verbindungsschicht liegt.

7. Mehrschichtiges Flächengebilde nach einem der Ansprüche 1 - 3, wobei die zweite Polymerkomponente im Bereich von 25 Gew.-% bis 90 Gew.-% der matten Verbindungsschicht liegt.

8. Mehrschichtiges Flächengebilde nach einem der Ansprüche 1 - 7, wobei die zweite Polymerkomponente ein Polymer mit mindestens einer der folgenden Eigenschaften aufweist:
i. Schmelzpunkttemperatur "Tₘ" höchstens 142 °C;
ii. Vicat-Erweichungspunkt (ASTM D1525) höchstens 108 °C; und/oder
iii. Biegemodul (ASTM D790) höchstens 550 MPa.

9. Mehrschichtiges Flächengebilde nach einem der Ansprüche 1 - 8, wobei die zweite Polymerkomponente ein Polymer mit mindestens einer der folgenden Eigenschaftsgruppen aufweist:
i. Dichte im Bereich von 0,850 g/cm³ bis 0,940 g/cm³, ein DSC-Schmelzpunkt im Bereich von 40 °C bis 160 °C und eine Schmelzflussrate im Bereich von 2 dg/min bis 100 dg/min;
ii. ein Propylen-Ethylen-Copolymer, das 75 Gew.-% bis 96 Gew.-% Propylen, 4 Gew.-% bis 25 Gew.-% Ethylen aufweist und eine Dichte im Bereich von 0,850 g/cm³ bis 0,900 g/cm³ aufweist;
iii. ein Biegemodul von nicht mehr als 2100 MPa und eine Dehnung von mindestens 300 %.
iv. isotaktische Stereoregularität, 84 Gew.-% bis 93 Gew.-% Propylen, 7 Gew.-% bis 16 Gew.-% Ethylen, ein DSC-Schmelzpunkt im Bereich von 42 °C bis 85 °C, eine Schmelzwärme von weniger al 75 J/g, Kristallinität im Bereich von 2 % bis 65 % und eine Molekulargewichtsverteilung von 2,0 bis 3,2;
v. eine Polymermischung, die mindestens ein Polymer (A) und mindestens ein Polymer (B) aufweist, wobei Polymer (A) 60 Gew.% bis 98 Gew.-% der Mischung ausmacht und Polymer (A) zu 82 Gew.-% bis 93 Gew.-% Einheiten, die von Propylen abgeleitet sind, und zu 7 Gew.-% bis 18 Gew.-% Einheiten umfasst, die von einem Comonomer abgeleitet sind, das ausgewählt ist aus der Gruppe bestehend aus Ethylen und einem ungesättigten Monomer außer Ethylen, und Polymer (A) ferner **dadurch gekennzeichnet ist, dass** es kristallisierbare Propylensequenzen aufweist, und Polymer (B) ein isotaktisches thermoplastisches Polymer außer Polymer (A) umfasst; und
vi. eine Polymermischung, die mindestens ein Polymer (A) und mindestens ein Polymer (B) aufweist, wobei Polymer (A) 60 Gew.% bis 98 Gew.-% der Mischung ausmacht und Polymer (A) zu 65 Gew.-% bis 96 Gew.-% Einheiten, die von Propylen abgeleitet sind, und zu 4 Gew.-% bis 35 Gew.-% Einheiten umfasst, die von einem Comonomer abgeleitet sind, das ausgewählt ist aus der Gruppe bestehend aus Ethylen und einem ungesättigten Monomer außer Ethylen, und Polymer (A) ferner **dadurch gekennzeichnet ist, dass** es kristallisierbare Propylensequenzen aufweist, und Polymer (B) ein isotaktisches thermoplastisches Polymer außer Polymer (A) umfasst.

10. Mehrschichtiges Flächengebilde nach einem der Ansprüche 1 - 9, wobei die Kernschicht ein hochkristallines Polypropylen aufweist.

11. Mehrschichtiges Flächengebilde nach einem der Ansprüche 1 - 10, wobei die Siegelung der Siegelungsschicht an sich selbst eine Siegelfestigkeit von mehr als 2000 g / 2,54 cm bei 127 °C hat.

12. Mehrschichtiges Flächengebilde nach einem der Ansprüche 1 - 11, wobei mindestens eine von den äußersten Oberflächen des Flächengebildes einer Behandlung unterzogen ist, die ausgewählt ist aus einer Lichtbogenentladung, einer Flammbehandlung, einer Plasmabehandlung, einer chemischen Behandlung oder einer Behandlung mittels einer polarisierten Flamme.

13. Mehrschichtiges Flächengebilde nach einem der Ansprüche 1 - 12, wobei das Flächengebilde mit einer Beschichtung beschichtet ist, die ausgewählt ist aus Ethylenacrylsäure, Ethylmethylacrylat-Copolymeren, Polyvinylidenchlorid, Polyvinylalkohol, Ethylvinylalkohol oder Kombinationen davon.

14. Mehrschichtiges Flächengebilde nach einem der Ansprüche 1 - 13, wobei das Flächengebilde durch Gasphasenabscheidung von Aluminium metallisiert ist.

15. Mehrschichtiges Flächengebilde nach einem der Ansprüche 1 - 14, wobei das Flächengebilde biaxial ausgerichtet ist.

16. Mehrschichtiges Flächengebilde nach einem der Ansprüche 1 - 15 als Verpackungs-, Etikettierungs- oder Bildererzeugungs-Flächengebilde.

## Revendications

1. Un film multicouche comprenant :
a) une couche noyau,
b) une couche de peau d'étanchéité, et
c) une couche de liaison mate, où la couche de liaison mate est intermédiaire à la couche noyau et la couche de peau d'étanchéité, ladite couche de liaison mate contenant au moins un premier composant polymère et au moins un deuxième composant polymère,
où le film multicouche possède une rugosité de surface (Ra) d'au moins 0,25 µm, conformément à ISO4287, et un décompte de crête (Pc) d'au moins 30 tel que mesuré par profilométrie de surface comme décrit ci-après, et où un joint d'étanchéité de la couche d'étanchéité possède une résistance d'étanchéité comme décrit ci-après supérieure à 1400 g/2,54 cm à 127°C, et où le premier composant polymère contient un mélange d'au moins deux polymères incompatibles.

2. Le film multicouche selon la Revendication 1, où le premier composant polymère est un mélange de polyéthylène haute densité avec un homopolymère, copolymère ou terpolymère de propylène.

3. Le film multicouche selon la Revendication 2, où le premier composant polymère contient du polyéthylène à différentes densités.

4. Le film multicouche selon l'une quelconque des Revendications 1 à 3, où le premier composant polymère contient un mélange d'au moins un terpolymère éthylène-propylène-butène et d'au moins un polyéthylène.

5. Le film multicouche selon l'une quelconque des Revendications 1 à 4, où le premier composant polymère contient un mélange d'au moins un terpolymère éthylène-propylène-butène, d'au moins un polyéthylène haute densité et d'au moins un polyéthylène faible densité.

6. Le film multicouche selon l'une quelconque des Revendications 1 à 5, où le deuxième composant polymère se situe dans la plage de 10% en poids à 75% en poids de ladite couche de liaison mate.

7. Le film multicouche selon l'une quelconque des Revendications 1 à 3, où le premier composant polymère se situe dans la plage de 25% en poids à 90% en poids de ladite couche de liaison mate.

8. Le film multicouche selon l'une quelconque des Revendications 1 à 7, où le deuxième composant polymère contient un polymère possédant au moins une des propriétés suivantes :
i. Température de point de fusion, "Tₘ", inférieure ou égale à 142°C,
ii. Point de ramollissement Vicat (ASTM D1525) inférieur ou égal à 108°C, et/ou
iii. Module d'élasticité en flexion (ASTM D790) inférieur ou égal à 550 MPa.

9. Le film multicouche selon l'une quelconque des Revendications 1 à 8, où le deuxième composant polymère contient un polymère possédant au moins un des ensembles de propriétés suivants :
i. Densité dans la plage de 0,850 g/cm³ à 0,940 g/cm³, un point de fusion DSC dans la plage de 40°C à 160°C et une vitesse d'écoulement à l'état fondu dans la plage de 2 dg/mn à 100 dg/mn,
ii. Un copolymère propylène-éthylène contenant 75% en poids à 96% en poids de propylène, 4% en poids à 25% en poids d'éthylène et possédant une densité dans la plage de 0,850 g/cm³ à 0,900 g/cm³,
iii. Un module d'élasticité en flexion inférieur à 2100 MPa et une élongation d'au moins 300%,
iv. Régularité stérique isotactique, 84% en poids à 93% en poids de propylène, 7% en poids à 16% en poids d'éthylène, un point de fusion DSC dans la plage de 42°C à 85°C, une chaleur de fusion inférieure à 75 J/g, une cristallinité dans la plage de 2% à 65% et une distribution de poids moléculaire de 2,0 à 3,2,
v. Un mélange de polymères contenant au moins un polymère (A) et au moins un polymère (B), le polymère (A) contenant 60% en poids à 98% en poids du mélange, et le polymère (A) contenant 82% en poids à 93% en poids d'unités dérivées de propylène et 7% en poids à 18% en poids d'unités dérivées d'un comonomère sélectionné dans le groupe se composant d'éthylène et d'un monomère non saturé autre qu'éthylène, et le polymère (A) étant **caractérisé en outre en ce qu'**il contient des séquences de propylène cristallisable, et le polymère (B) contenant un polymère thermoplastique isotactique autre que le polymère (A), et
vi. Un mélange de polymères contenant au moins un polymère (A) et au moins un polymère (B), le polymère (A) contenant 60% en poids à 98% en poids du mélange, et le polymère (A) contenant 65% en poids à 96% en poids d'unités dérivées de propylène et 4% en poids à 35% en poids d'unités dérivées d'un comonomère sélectionné dans le groupe se composant d'éthylène et d'un monomère non saturé autre qu'éthylène, et le polymère (A) étant **caractérisé en outre en ce qu'**il contient des séquences de propylène cristallisable, et le polymère (B) contenant un polymère thermoplastique isotactique autre que le polymère (A).

10. Le film multicouche selon l'une quelconque des Revendications 1 à 9, où la couche noyau comprend un polypropylène à haute cristallinité.

11. Le film multicouche selon l'une quelconque des Revendications 1 à 10, où le joint d'étanchéité de la couche d'étanchéité possède une résistance d'étanchéité supérieure à 2000 g/2,54 cm à 127°C.

12. Le film multicouche selon l'une quelconque des Revendications 1 à 11, où au moins une des surfaces les plus extérieures dudit film est traitée avec un traitement sélectionné parmi au moins décharge par effet corona, traitement à la flamme, traitement au plasma, traitement chimique ou traitement au moyen d'une flamme polarisée.

13. Le film multicouche selon l'une quelconque des Revendications 1 à 12, où ledit film est enduit avec un revêtement sélectionné parmi acide acrylique d'éthylène, copolymères d'éthylène méthyle acrylate, chlorure de polyvinylidène, alcool de polyvinyle, alcool de vinyle éthyle, ou des combinaisons de ceux-ci.

14. Le film multicouche selon l'une quelconque des Revendications 1 à 13, où le film est métallisé par dépôt sous vide d'aluminium.

15. Le film multicouche selon l'une quelconque des Revendications 1 à 14, où le film est orienté biaxialement.

16. Une utilisation des films selon l'une quelconque des Revendications 1 à 15 en tant que film de conditionnement, d'étiquetage ou d'imagerie.
